(19) Europäisches Patentamt
European Patent Office
Office européen des brevets

(11) **EP 4 475 376 A1**

(12) **EUROPEAN PATENT APPLICATION**

(43) Date of publication:
**11.12.2024 Bulletin 2024/50**

(21) Application number: **23178476.0**

(22) Date of filing: **09.06.2023**

(51) International Patent Classification (IPC):
***H02J 3/36*** (2006.01)          ***H02M 7/483*** (2007.01)

(52) Cooperative Patent Classification (CPC):
**H02J 3/36; H02M 1/32; H02M 7/4835**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **General Electric Technology GmbH
5400 Baden (CH)**

(72) Inventors:
• **BARKER, Carl
  Stafford, ST16 1WS (GB)**
• **ADAMCZYK, Andrzej
  Stafford, ST16 1WS (GB)**

(74) Representative: **Openshaw & Co.
8 Castle Street
Farnham, Surrey GU9 7HR (GB)**

(54) **IMPROVEMENTS RELATING TO THE CONTROL OF POWER CONVERTERS IN POWER TRANSMISSION NETWORKS BASED ON THE APPLICATION OF SYMMETRIC COMPPONENTS**

(57)     A computer-implemented method (300) of controlling a power converter in a power transmission network. The method (300) comprises determining (310) a first AC voltage at the point of connection. The method (300) further comprises regulating (320) a second AC voltage, output from the power converter for counteracting the first AC voltage. The step of regulating (320) the second AC voltage comprises comparing (321) a first amplitude value of a first negative phase sequence voltage component of the first AC voltage to a first limit value; and then outputting (322) a second negative phase sequence voltage component of the second AC voltage to comprise a second amplitude value that is substantially equal to zero, when the comparing determines the first amplitude value is less than or equal to the first limit value, and, substantially equal to the difference between the first amplitude value and the first limit value, when the comparing (321) determines the first amplitude value is greater than the first limit value.

Figure 3

**Description**

<u>Field</u>

The subject matter herein relates generally to the field of power transmission networks and more specifically to the control of power converters in power transmission networks.

<u>Introduction</u>

In high voltage direct current (HVDC) power transmission networks, alternating current (AC) power is typically converted to direct current (DC) power for transmission via overhead lines, under-sea cables and/or underground cables. This conversion removes the need to compensate for the AC reactive/capacitive load effects imposed by the power transmission medium, i.e. the transmission line or cable, and reduces the cost per kilometre of the lines and/or cables, and thus becomes cost-effective when power needs to be transmitted over a long distance. DC power can also be transmitted directly from offshore wind parks to onshore AC power transmission networks, for instance.

The conversion between DC power and AC power is utilised where it is necessary to interconnect DC and AC networks. In any such power transmission network, power conversion means also known as converters (i.e. power converters in converter stations) are required at each interface between AC and DC power to effect the required conversion from AC to DC or from DC to AC.

The choice of the most suitable HVDC power transmission network or scheme depends on the particular application and scheme features. Examples of power transmission networks include monopole power transmission networks and bipole power transmission networks.

The dynamic exchange of active and reactive power between a power electronic converter interfaced system, such as an HVDC transmission link and the AC power system or grid itself, is primarily governed by a control algorithm employed by the power electronic converter. More specifically, synchronous grid forming (SGFM) control is gaining in interest and popularity owing to its strengthening effect on the stability of the overall power system.

<u>Summary</u>

A typical characterization of SGFM control is to make a power electronic converter behave as a three-phase, positive phase sequence, AC voltage source, that resides behind an impedance. The power electronic converter operates at a frequency that is synchronous with other SGFM sources connected to the same power system. The use of SGFM control brings benefits in scenarios where an AC power system perturbation materializes. In response to such a perturbation, the power electronic converter would inherently exchange transient current that would counteract the voltage and/or frequency change experienced at the point of connection of the converter to the AC power system.

However, unlike other SGFM sources such as synchronous generators, power electronic interfaced systems, including power converters in HVDC converter stations, need to obey much stricter current limits. Hence, SGFM converter control methods and apparatus must not allow steady state or transient currents to exceed these limits. In order to achieve this, SGFM control methods and apparatus must act to modify the output voltage profile of the power converter should a risk of non-compliance with the current limits arise.

An example of a scenario whereby the current limits of a power electronic converter could be exceeded is that of an insulation fault occurring in a connected AC power system. This may result in a relatively large voltage deviation at the point of connection of the power electronic converter and the AC power system. The larger the voltage difference between the point of connection and the voltage behind the converter impedance, the higher the current exchange will be.

A three-phase system is designed to operate as a balanced system comprising only positive phase sequence voltage/current. However, when an AC power system undergoes an asymmetric fault, such as a single-phase earth fault, a large negative phase sequence voltage component may be introduced and experienced at the converter point of connection to the AC power system. The negative phase sequence voltage component is likely to drive a relatively large negative phase sequence current exchange. Combined with other current components, this could potentially overload at least a portion of the semiconductor devices within the power converter.

More specifically, with regard to modular, multi-level voltage sourced converters (MMC VSC) that are typically employed in HVDC systems, this unmitigated exchange of negative phase sequence AC current combined with the positive phase sequence AC current, and DC and converter circulating currents, could overload the transistors (insulated-gate bipolar transistors (IGBT), for instance) in the sub-modules of a converter valve or group of valves.

An approach to mitigating this issue is to regulate the flow of the negative phase sequence current through the use of a negative phase sequence current feedback controller. A controller of this type measures the power converter AC current and decomposes said current into sequence components in a manner well understood in the art. Then, the controller determines a desired converter output negative phase sequence voltage to drive the measured negative phase sequence current to a required reference value (typically, zero Amperes).

A problem arises however with the specification of the required reference value. It is desirable to maintain the balance of the AC voltage at the point of connection of a converter to an AC power system. The amplitude and phase of the negative phase sequence current that achieves this is variable and depends on the disturbance that causes the initial voltage unbalance. For instance, a balancing voltage during a single-phase-to-earth fault would require a different negative phase sequence current contribution than for a phase-to-phase fault. Hence there is no unique, fixed negative phase sequence current reference that a user of a power electronic interface system can request that is beneficial across all scenarios. It is in fact the case that the use of a fixed reference value, could lead to an increase of the voltage unbalance in some scenarios. Related is that setting the negative phase sequence current reference to zero is also undesirable as this would result in the power electronic converter not actually contributing to voltage balancing, at all.

Hence, it is desirable to provide a method of controlling a power converter that mitigates these issues.

According to a first aspect of the invention, there is provided a computer-implemented method of controlling a power converter in a power transmission network, the power converter having an AC side electrically connected to an AC network at a point of connection, the method comprising: determining a first AC voltage at the point of connection, wherein the first AC voltage comprises a first negative phase sequence voltage component; and regulating a second AC voltage, output from the AC side of the power converter, for counteracting the first AC voltage, wherein the second AC voltage comprises a second negative phase sequence voltage component; wherein the step of regulating the second AC voltage comprises: comparing a first amplitude value of the first negative phase sequence voltage component to a first limit value; and then outputting the second negative phase sequence voltage component to comprise a second amplitude value that is: substantially equal to zero, when the comparing determines the first amplitude value is less than or equal to the first limit value; and substantially equal to the difference between the first amplitude value and the first limit value, when the comparing determines the first amplitude value is greater than the first limit value.

The inventors have recognized that a voltage unbalance can lead to both positive and negative phase sequence components of voltage/current. These components may require mitigative action to avoid overload and damage to a power electronic interfaced system (in particular, to the subcomponents of power electronic converters). The solution does not, however, intend to apply a blanket control/regulation of the flow of negative sequence current in all scenarios where negative phase sequence components flow. Moreover, the solution restricts the amplitude of negative sequence current only in extreme cases where, for instance, the contribution of negative sequence current could cause current capability associated with a power electronic converter to be exceeded. Therefore, for as long as the negative phase sequence current amplitude is below a predetermined limit, the method controls a converter to behave purely as a positive phase sequence AC voltage source. The negative phase sequence current in such a scenario is able to flow naturally and in proportion to the degree of voltage unbalance caused by the system disturbance. Indeed, the converter itself will not therefore, exchange negative phase sequence current at all unless there is voltage imbalance present.

As discussed herein, it is in fact the case that the method controls the power electronic converter to limit the negative phase sequence current, only where the degree of AC system voltage unbalance is so severe that the resulting natural flow of negative phase sequence current could cause damage to the components or stability of operation of the power electronic interfaced system. This is achieved by recognizing that a power electronic converter has intrinsic tolerance up to a current limit and that negative phase sequence components of current can contribute to exceeding such an overall limit. Where such a limit could be breached, the invention controls the converter to introduce a negative phase sequence component to the converter output AC voltage. In effect, the converter no longer acts only as a pure positive phase sequence AC source. However, the method tends to ensure that the amount of negative phase sequence voltage is always kept at the minimum feasible level and hence tends to allow the maximum allowed contribution towards voltage balancing.

Prior art methods may seek to drive the negative phase sequence current to a specific value which predefines a current profile for voltage unbalance generically. The invention as disclosed herein does not predefine such a current profile for voltage unbalance events. Hence, the AC system tends to get positive and self-adjusting contribution towards voltage balancing as if the converter is acting as an unrestricted SGFM source. The primary difference is that the maximum contribution to voltage balancing is limited in a manner that respects design rating and performance constraints of the power electronic interfaced device (the power converter). The limit value itself can be predetermined and is not necessarily a function of the AC grid disturbance type or severity.

In some embodiments, the first limit value is a function of: an AC impedance of the power converter; and a predetermined maximum allowed negative phase sequence AC current for the power converter.

The power converter may have intrinsic limitations relating to the amount of current that converter submodules can experience before damage is caused or operation of the converter is otherwise effected. Positive phase sequence current and negative phase sequence current, in addition to DC currents and circulating currents in the converter itself, may contribute to the total current experienced by the power converter. A certain amount of negative phase sequence AC current may be tolerated and allowed to flow naturally in the steady-state or in response to system disturbance. However, a threshold or limit to the negative sequence current can be defined above which operational effects on the converter may occur including the converter taking automatic protective action to avoid damage. A converter acting as a voltage source can regulate this negative sequence current by defining the limit value as a voltage limit which is a function of the predetermined maximum allowed negative phase sequence AC current.

For completeness, the equivalent AC impedance of the power converter may comprise a contribution from the converter valves and a contribution from an interface transformer. These impedances are predominantly reactive (thereby permitting the resistive part of the impedance to be neglected). This conveniently allows the equivalent AC impedance of the power converter to be represented by a single reactor, in some embodiments.

In some embodiments, the step of comparing the first amplitude to the first limit value comprises: determining, a first phasor representing the first negative phase sequence voltage component, the first phasor having an origin value and extending to the first amplitude value; determining a phase-vector region, centered on the first amplitude value and having a radius equal to the first limit value; and then determining whether the phase-vector region encompasses the origin value.

In some embodiments, the comparing comprises determining the first amplitude value to be less than or equal to the first limit value when the phase-vector region encompasses the origin value; and the comparing comprises determining the first amplitude value to be greater than the first limit value, when the phase-vector region does not encompass the origin value.

Phasors are a convenient representation of voltage components having amplitude and phase. The inventors have recognized that phase-vector space can also allow definition of a region therein where negative phase sequence components of the first AC voltage, irrespective of phase, will not provoke a limiting response from a controller exercising the claimed method. Hence negative phase sequence components of the first AC voltage that can naturally flow, vice those that provoke a counteracting second AC voltage from the converter, can be efficiently identified.

In some embodiments, determining the first AC voltage at the point of connection comprises: measuring, using voltage measurement means, the first AC voltage at the point of connection.

The voltage measurement means may comprise a voltmeter electrically connected between the point of connection and an earth. This allows for direct measurement of the first AC voltage. Alternatively, the voltage measurement means may comprise a device that measures a parameter at the point of connection or elsewhere in a power transmission network, and then estimating therefrom, the first AC voltage.

In some embodiments, the determining the first AC voltage at the point of connection comprises: decomposing the first AC voltage into at least the first negative phase sequence AC voltage component.

Decomposing the first AC voltage involves extracting the first AC voltage to phase sequence components (for instance negative phase, positive phase, and/or zero phase components).

For example, the first AC voltage and the second AC voltage may comprise respectively a first positive phase sequence AC voltage component and a second positive phase sequence AC voltage component in addition to the respective negative phase sequence components.

In some embodiments, the power transmission network is a high voltage direct current (HVDC) power transmission network.

HVDC power transmission networks utilize power electronic converters and control methods such as SGFM for which the problems hereinbefore mentioned occur. The invention described herein provides a solution to these problems.

In some embodiments, the power converter is a voltage sourced converter (VSC), preferably a modular multilevel (MMC) converter.

The unmitigated exchange of negative phase sequence AC current combined with positive phase AC current, DC and circulating currents, in VSCs and in particular MMCs can overload transistors in sub-modules of converter valves. The invention described herein provides a solution whereby negative sequence currents are permitted to flow up to a limit which, if exceeded, could result in such overload and/or control instability. The limit can be set based on the limits of the converter hardware and control algorithm itself, which are pre-known. Hence the invention described herein offers an ability to protect VSCs and MMCs from current overload.

In some embodiments the AC network is an AC power grid.

As discussed herein, faults such as insulation faults to earth in an AC power grid can cause voltage unbalance at the point of connection of an AC power grid to a power converter. This can result in large negative sequence current exchange, risking damage to power electronics. The invention discussed herein provides a solution that protects power electronics from damage, whilst still allowing negative sequence current to flow naturally during certain scenarios.

In some embodiments the method is for use in synchronous grid forming (SGFM).

In SGFM, power electronic converters are configured to behave as voltage sources. However, said converters have intrinsic limitations with respect to current flow that other synchronous devices may not be so susceptible to. The invention described herein considers such limitations and controls the converter as a voltage source in a manner that limits negative sequence current flow to safe levels for converter hardware, when required.

According to a second aspect of the invention, there is provided a controller for controlling a power converter in a power transmission network, the controller comprising: a memory; and at least one processor; wherein the memory comprises computer-readable instructions which when executed by the at least one processor cause the controller to perform the method of the first aspect of the invention.

According to a third aspect of the invention, there is provided a power converter for a power transmission network, comprising: an AC side for electrically connecting to an AC network at a point of connection; and a DC side for electrically connecting to a DC network; and the controller of the second aspect of the invention.

According to a fourth aspect of the invention, there is provided a power transmission network comprising: an AC network; a DC network; and the power converter of the third aspect of the invention, wherein the AC network is connected to the AC side of the power converter and the DC network is connected to the DC side of the power converter.

According to a fifth aspect of the invention, there is provided a computer program comprising instructions which when executed by a processor of a controller for a power converter, cause the controller to perform the method the first aspect of the invention.

According to a sixth aspect of the invention, there is provided a non-transitory computer-readable storage medium comprising the computer program of the fifth aspect of the invention.

It will be appreciated that particular features of different aspects of the invention share the technical effects and benefits of corresponding features of other aspects of the invention. More specifically, the controller, power converter, power transmission network, computer program, non-transitory computer-readable medium, share the technical effects and benefits of the computer-implemented method of the invention.

It will also be appreciated that the use of the terms "first" and "second", and the like, are merely intended to help distinguish between similar features and are not intended to indicate a relative importance of one feature over another, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

Brief description of the drawings

Embodiments of the invention will now be described by way of example only and with reference to the accompanying drawings, in which:

Figure 1 illustrates generically, an example of a power transmission network;
Figure 2 illustrates an embodiment of a controller for a power converter;
Figure 3 illustrates an embodiment of a method of controlling a power converter in a power transmission network;
Figure 4 illustrates an example schematic of a power converter arranged as a voltage sourced converter;
Figure 5 illustrates a negative phase sequence phasor diagram showing current limiting principles;
Figure 6 illustrates an embodiment of a negative phase sequence phasor diagram for normal AC grid operation;
Figure 7 illustrates a further embodiment of a negative phase sequence phasor diagram;
Figure 8 illustrates a further embodiment of a negative phase sequence phasor diagram; and
Figure 9 illustrates a further embodiment of a negative phase sequence phasor diagram.

Detailed description

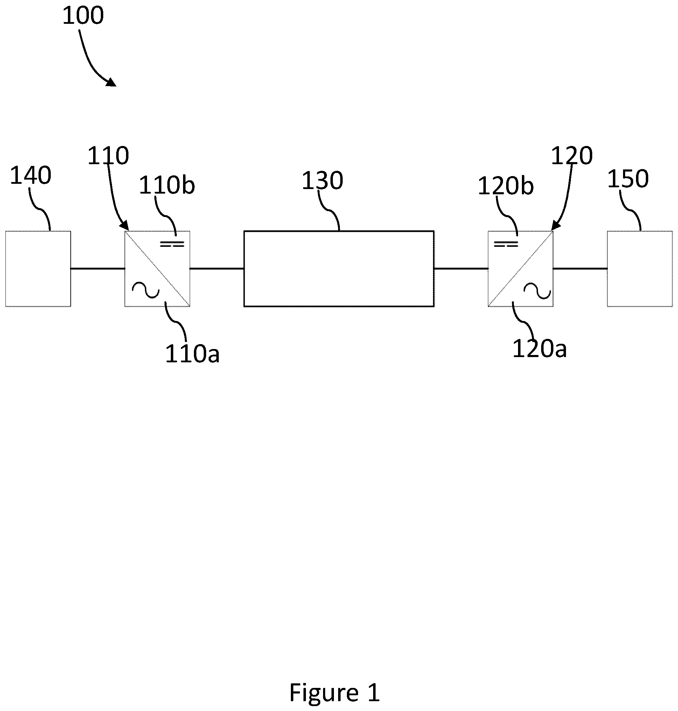

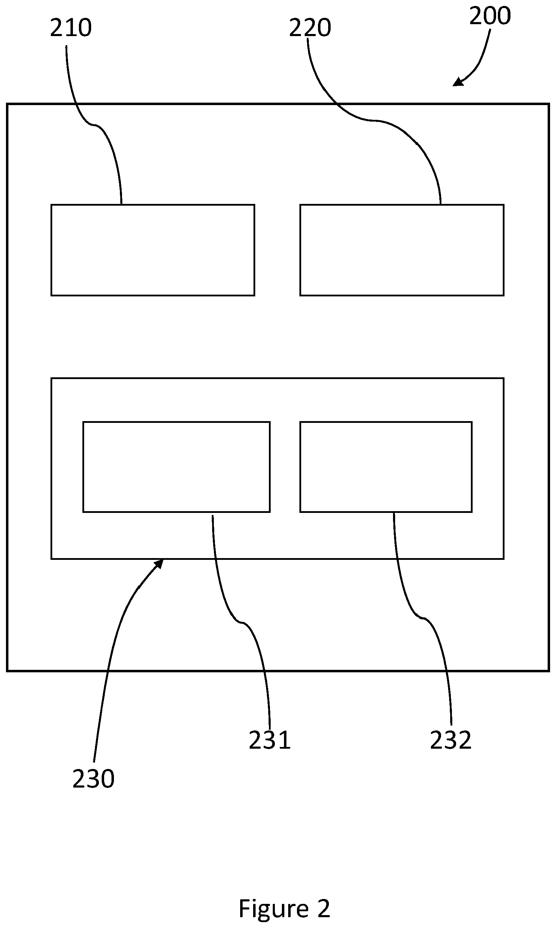

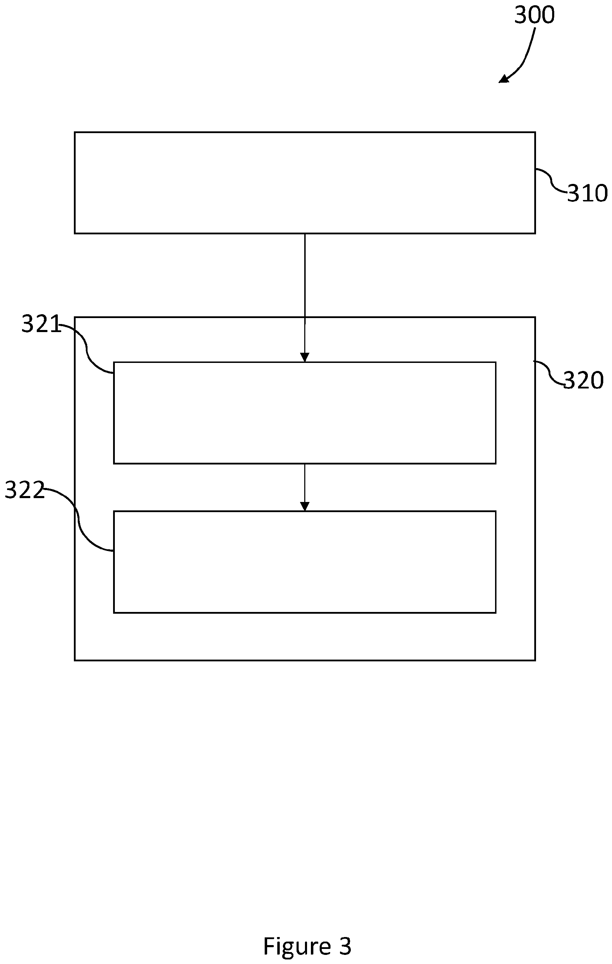

Figure 1 illustrates generically, an example of a power transmission network 100. The illustration is not intended to be limited to representing a particular power transmission scheme, such as a monopole or bipole HVDC transmission network, but is moreover provided as a generic example illustrating principles of operation of a power transmission network that are useful for understanding the invention. In this manner, the power transmission network 100 may represent, generically, a monopole or bipole scheme, or may represent a multiterminal power transmission scheme, for instance. Hence whilst specific features in the illustration are shown connected to each other with a specific number of connections, it will be understood that this is not intended to be limiting either, but moreover to illustrate a generic connection between features/components. Related, is that relative dimensions or distances between components perceived in the illustration are also not intended to be limiting. It will therefore be understood that principles and features in the network 100 and herein discussed can be applied to networks comprising the controller 200 of Figure 2, for instance. Furthermore, the method 300 of Figure 3 may be exercised in a network 100 according to Figure 1.

The power transmission network 100 illustrates a first power conversion means 110 (also known as a converter station) and a second power conversion means 120. The power conversion means 110, 120, convert AC power to DC power (and vice versa), acting essentially as a rectifier (when converting AC power to DC power for transmission) and an inverter (when receiving DC power and converting to AC power). The power conversion means 110, 120, may each comprise a single converter in the case of a monopole system, or two converters in the case of a bipole system. The power conversion means 110, 120, may represent a plurality of converter stations arranged as a multi-terminal power transmission system. Generically, the first power conversion means 110 comprises a first AC side 110a and a first DC side 110b. Generically, the second power conversion means 120 comprises a second AC side 120a and a second DC side 120b.

The first power conversion means 110 is illustrated as being connected to a first AC network 140. The first AC network 140 is illustrated as being connected to the first AC side 110a of the first power conversion means 110.

The second power conversion means 120 is illustrated as being connected to a second AC network 150. The second AC network 150 is illustrated as being connected to the second AC side 120a of the second power conversion means 120. The first AC network 140 and/or second AC network 150 may be electrical power transmission systems comprising power generation apparatus, transmission apparatus, distribution apparatus, and electrical loads. The first AC network 140 and/or second AC network 150 may comprise a renewable power generation network such as a wind-power generation network, solar-power generation network, bio-power generation network. The first AC network 140 or second AC network 150 may be a consumer network. By way of non-limiting example, the first AC network 140 may be a power generation network, with second AC network 150 being a consumer network, for instance.

Also illustrated is a power transmission medium 130 interconnecting the first power conversion means 110 and the second power conversion means 120. The power transmission medium 130 is connected between the first DC side 110b of first power conversion means 110 and the second DC side 120b of the second power conversion means 120. The power transmission medium 130 may comprise electrical cables and other electrical components interconnecting the first and second power conversion means 110, 120. For instance, the power transmission medium 130 may comprise a conductor providing a first electrical pole; and/or a conductor providing a second electrical pole. A neutral arrangement may also be provided interconnecting the first and second power conversion means 110, 120. The power transmission medium 130 provides the medium through which DC power is transmitted between the power conversion means 120, 130.

The operation of the power transmission system 100 can be generically described as follows. The first AC power generation network 140 generates AC power that is provided to first power conversion means 110 at the first AC side 110a. The first power conversion means 110 converts the received AC power to a DC power for transmission to second power conversion means 120. The DC power is transmitted from first DC side 110b over the power transmission medium 130 to the second DC side 120b of second power conversion means 120. The second power conversion means 120 converts the received DC power back to an AC power. The AC power to then provided from second AC side 120a to second AC network 150 for consumption. In particular examples, the power conversion means 110 and 120 may be geographically remote. For instance, the first power conversion means 110 may reside with an off-shore wind farm and the second power conversion means 120 may reside on-shore.

It will be appreciated that various other electrical components may be located at any particular location or with any particular feature/component in the example 100. These may include switches, transformers, resistors, reactors, surge arrestors, harmonic filters and other components well known in the art.

It will be appreciated that converters or power conversion means may comprise a number of different technologies such as voltage sourced converters (for instance using insulated gate bipolar transistor (IGBT) valves). Such converters may generally be considered to use 'power electronics'. Power electronic converters may comprise multi-level voltage sourced converters, for instance.

It will be appreciated that cables used as power transmission mediums may comprise the following non-limiting examples of crosslinked polyethylene (XLPE) and/or mass impregnated (MI) insulation cables. Such cables may comprise a conductor (such as copper or Aluminium) surrounding by a layer of insulation. Dimensions of cables and their associated layers may be varied according to the specific application (and in particular, operational voltage requirements). Cables may further comprise strengthening or 'armouring' in applications such as subsea installation.

Moreover, it will be understood that the power transmission network 100 may be used with three-phase power systems. In a three-phase power system, three conductors supply respective first, second and third phases of AC power to a consumer. Each of the first, second and third phases will typically have equal magnitude voltages or currents, which are displaced in phase from each other by 120°.

In a three-phase power system, phase currents and voltages can be represented by three single phase components: a positive sequence component; a negative sequence component; and a zero-sequence component. It is the positive sequence component that rotates in phase in accordance with the power system. Hence, in the idealistic scenario, only positive sequence voltage/current will exist. It will be understood that an unbalance in voltage or current between the first, second and third-phases, of a three-phase system, in magnitude or phase angle, can give rise to undesirable negative or zero-sequence components.

The power transmission network 100 may be operated using methods such as synchronous grid forming (SGFM) wherein either or both of the power converters 110, 120 behave as three-phase, positive-phase sequence AC voltage sources behind an impedance, that operate at a frequency synchronous with over SGFM sources connected to the power transmission network 100.

The power transmission network 100 may further comprise a controller for controlling the operation of components of the power transmission network 100. For instance, a controller may be provided for executing the methods described herein. Such a controller may control the power conversion means 110, 120, for instance. The controller may be the controller 200 of Figure 2.

Figure 2 illustrates an embodiment of a controller 200 as may be used in implementing the invention described herein.

The controller 200 comprises a memory 210 and at least one processor 220. The memory 210 comprises computer-readable instructions, which when executed by the at least one processor 220, cause the controller 200 to perform the method/s described herein.

The controller 200 is illustrated as comprising a transceiver arrangement 230 which may comprise a separate transmitter 231 and receiver 232. The transceiver arrangement 230 may be used to operatively communicate with other components or features of embodiments described herein either directly or via a further interface such as a network interface. The transceiver arrangement 230 may for instance send and receive control signals using transmitter 231 and receiver 232. The control signals may contain or define electrical control parameters such as reference currents or reference voltages.

The at least one processor 220 is capable of executing computer-readable instructions and/or performing logical operations. The at least one processor 220 may be a microcontroller, microprocessor, central processing unit (CPU), field programmable gate array (FPGA) or similar programmable controller. The controller may further comprise a user input device and/or output device. The processor 220 is communicatively coupled to the memory 210 and may in certain embodiments further comprise and be coupled to the transceiver 230.

The memory 210 may be a computer readable storage medium. For instance, the memory 210 may include a non-volatile computer storage medium. For example, the memory 210 may include a hard disk drive, flash memory etc.

Whilst not illustrated, the controller 200 may additionally include a user input device interface and/or a user output device interface, which may allow for visual, audible or haptic inputs/outputs. Examples include interfaces to electronic displays, touchscreens, keyboards, mice, speakers and microphones.

Figure 3 illustrates an embodiment of a computer-implemented method 300 of controlling a power converter in a power transmission network. The power converter having an AC side electrically connected to an AC network at a point of connection.

A first step 310 comprises determining a first AC voltage at the point of connection, wherein the first AC voltage comprises a first negative phase sequence voltage component.

A further step 320 comprises regulating a second AC voltage, output from the AC side of the power converter, for counteracting the first AC voltage, wherein the second AC voltage comprises a second negative phase sequence voltage component.

The step 320 of regulating the second AC voltage further comprises comparing 321 a first amplitude value of the first negative phase sequence voltage component to a first limit value.

The step 320 of regulating the second AC voltage further comprises outputting 322 the second negative phase sequence voltage component to comprise a second amplitude value that is: substantially equal to zero, when the comparing 321 determines the first amplitude value is less than or equal to the first limit value; and substantially equal to the difference between the first amplitude value and the first limit value, when the comparing 321 determines the first amplitude value is greater than the first limit value.

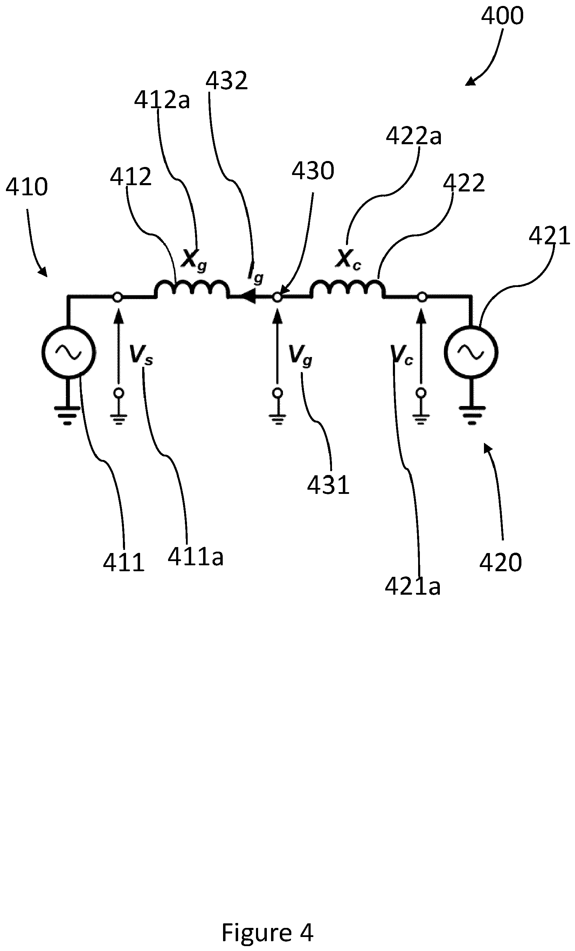

Figure 4 illustrates an electrical schematic 400, useful for understanding the invention, showing a power converter arranged as a voltage sourced converter.

The schematic 400 shows power grid 410 represented by a first voltage source 411 electrically connected in series with a first electrical component 412. The first voltage source 411 has an associated measured source voltage 411a referred to as '$V_s$'. The first electrical component 412 provides an impedance 412a referred to as '$X_g$'.

The schematic 400 also shows a power converter 420 represented by a second voltage source 421 electrically connected in series with a second electrical component 422. The second voltage source 421 has an associated measured second AC voltage (converter voltage) 421a referred to as '$V_c$'. The second electrical component 422 provides an impedance 422a referred to as '$X_c$'.

The schematic 400 further illustrates that the first electrical component 412 is electrically connected to the second electrical component 422 at an electrical point of connection 430. A first AC voltage (grid voltage) 431, referred to as '$V_g$' is illustrated as being present at the electrical point of connection 430. A grid current 432, referred to as '$I_g$' is illustrated as flowing through the electrical point of connection 430.

The schematic 400 illustrates how, at the point of connection 430, the power converter 420 appears as a voltage source connected in series with an impedance. Hence the power converter 420 can be operated as a controllable AC voltage source. Similarly, the schematic 400 illustrates how, at the point of connection 430, the power grid 410 appears as a voltage source connected in series with an impedance.

For a three-phase system, the AC voltages can be decomposed into respective positive phase sequence, negative phase sequence and zero phase sequence components. An analogous decomposition of the grid current 432 can be performed. Such a decomposition and the relevance of the negative phase sequence components of voltage and current will become apparent in the following discussion.

Converter control according to the invention disclosed herein, may advantageously define positive and negative phase sequence AC voltage outputs from a converter in terms of amplitude and angle. To limit the amplitude of the negative phase sequence current that the converter 420 exchanges with the grid 410, a controller may regulate the negative phase sequence output voltage component of the second AC voltage from the converter 420 to a region/set of values that is a function of the measured negative phase sequence component of the first AC voltage (grid voltage) 431 at the electrical point of connection 430, a negative phase sequence current limit for the converter 420, and an equivalent AC impedance of the converter 420. This region can be conveniently defined as a phase-vector region in a negative phase sequence phasor diagram. Such an approach will now be discussed as an example of an embodiment of the invention.

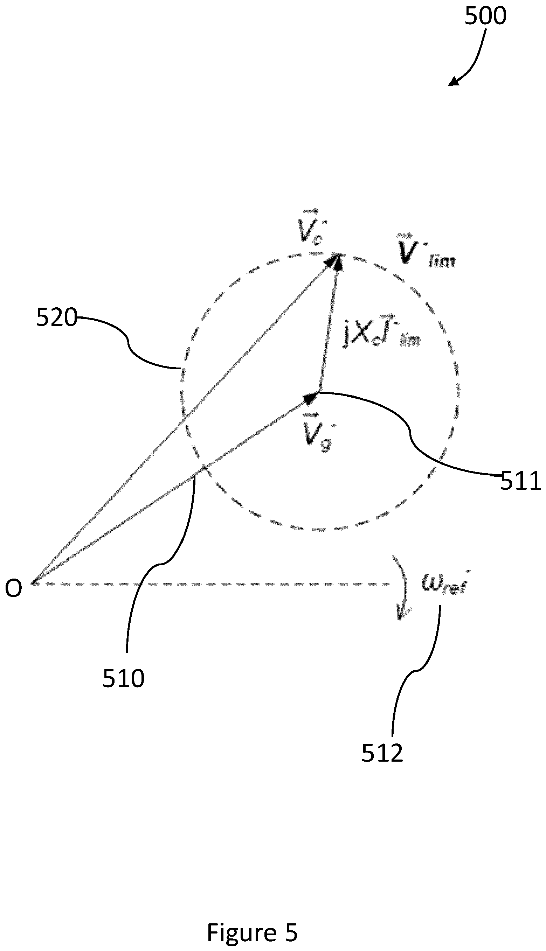

Figure 5 provides an illustration of a negative phase sequence phasor diagram 500 showing certain principles of current limiting, useful for understanding the invention. The phasor diagram 500 has an origin 'O'. The conversion of an AC voltage to positive, negative, and zero phase components, would be well understood by a person skilled in the art and is not discussed further herein.

Extending from the origin O is a first phase-vector (phasor) 510 illustrated as $\vec{V}_g^-$ , representing the negative phase sequence component of the first AC voltage Vg (the measured grid voltage at the point of connection). The first phase-vector 510 extends to a first amplitude value 511. The first phase-vector 510 rotates about the origin O at an angular velocity 512 illustrated as $\omega_{ref}$. The rotation of phase-vectors will be familiar to one skilled in the art.

A circular phase-vector region 520 is also illustrated in the diagram 500. The circular region 520 is centered on the first amplitude value 511. Put differently, the circular region 520 encircles the tip of the measured negative phase sequence component of the first AC voltage (the grid voltage at the point of connection). The shape and size of the circular region 520 follows from fundamental Kirchoff's Laws (such Laws being familiar to those skilled in the art).

Taking the example of a VSC MMC HVDC converter, the equivalent AC impedance of the converter can be considered as being half of the converter valve impedance connected in series with an interface transformer impedance. Both of these impedances are predominantly reactive (thereby permitting the resistive part of the impedance to be neglected) and hence the equivalent impedance of a converter can be represented as a single reactor for the purposes of Kirchoff's equations. This is expressed in Equation 1, wherein j is an imaginary number familiar to those in the art, and *Xc* represents the equivalent impedance of the converter.

$$Reactance = -jX_c \qquad \text{Equation 1}$$

The boundary of the circular region 520, annotated as $\vec{V}_{lim}^-$ , defines all possible negative phase sequence components of the second AC voltage (the converter voltage), $\vec{V}_c^-$ , that would result in negative phase sequence current exchange with the power grid equal in amplitude to a current limit value, $I_{lim}^-$ . The current limit value $I_{lim}^-$ itself represents a predetermined value based on the limitations of the power electronic converter or other factors determined by the user. The maximum current allowed to flow through the power electronic converter can itself be predefined (for instance as a protection threshold for submodules or transistors contained therein). The positive and negative phase sequence components of current, DC currents, and circulating currents will all contribute to provide a total current experienced by the converter at a given point in time. Hence an allocation of the maximum current allowed to flow through the power electronic converter may be allocated to positive phase sequence and a further allocation may be provided to the negative phase sequence. The sum of the allocations must not exceed the maximum current.

Put differently, any negative phase sequence components of the second AC voltage that are located inside the circular region 520 and not at it's boundary would result in negative phase sequence current exchange smaller in amplitude than the current limit value, $I_{lim}^-$ . In this manner, the circular region 520 defines a converter voltage vector loci wherein resulting current exchange is guaranteed not to be greater than the current limit. Expressed mathematically, and in view of Equation 1, the maximum negative phase sequence component of the converter voltage, $\vec{V}_{lim}^-$ , can be expressed according to Equation 2.

$$\vec{V}_{lim}^{-} = \vec{V}_{g}^{-} + jX_c\vec{I}_{lim}^{-} \qquad\qquad \text{Equation 2}$$

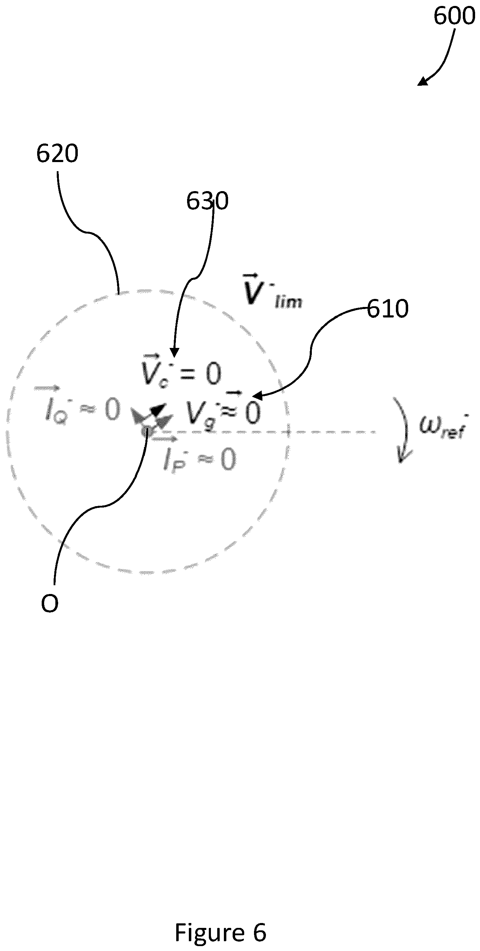

The abovementioned principles of current limiting have been described to aid the understanding of a preferential embodiment of the invention. In such preferential embodiments a first phasor is determined, representing the first negative phase sequence voltage component of the first AC voltage (grid voltage at the electrical point of connection). A phase-vector region is determined, centered on the first amplitude of the first phasor and having a radius equal to the first limit value. It is then determined whether the phase-vector region comprises the origin value. When the phase-vector region encompasses the origin value, it is determined that the first amplitude value is less than the limit value and the second amplitude value of negative phase sequence component of the second AC voltage output by the converter is zero. When the phase-vector region does not encompass the origin value, it is determined that the first amplitude value is greater than the limit value and the second amplitude value of the negative phase sequence component of the second AC voltage output by the converter is made substantially equal to the difference between the first amplitude value and the limit value. This procedure will be evident in the Figures 6-9 and the associated discussion.

Figure 6 illustrates an embodiment of a negative phase sequence phasor diagram 600 for normal AC grid operation.

The diagram 600 shows a negative phase sequence component of the first AC voltage (the measured grid voltage at the point of connection) as a first phasor 610 with negligible amplitude. The circular region 620 contains the origin O of the diagram 600. The negative phase sequence component of the second AC voltage (the converter output voltage) is illustrated as a second phasor 630 with negligible amplitude. The scenario represented by the diagram 600 will now be discussed.

In normal operation when the first AC voltage (the measured AC grid voltage at the electrical point of connection) is within an expected steady-state range, the SGFM control methods described herein would control a power converter to exchange active and reactive power by setting appropriate values to the amplitude and phase of the positive phase sequence component of the second AC voltage (the converter output voltage). The negative phase sequence component of the second AC voltage, represented by phasor 630, would be kept at zero. Moreover, in normal operation the negative phase sequence component of the first AC voltage (the grid voltage at the point of connection), represented by phasor 610, would be substantially zero. Hence, the negative phase sequence current exchange under such conditions would also be negligible as illustrated in the diagram 600.

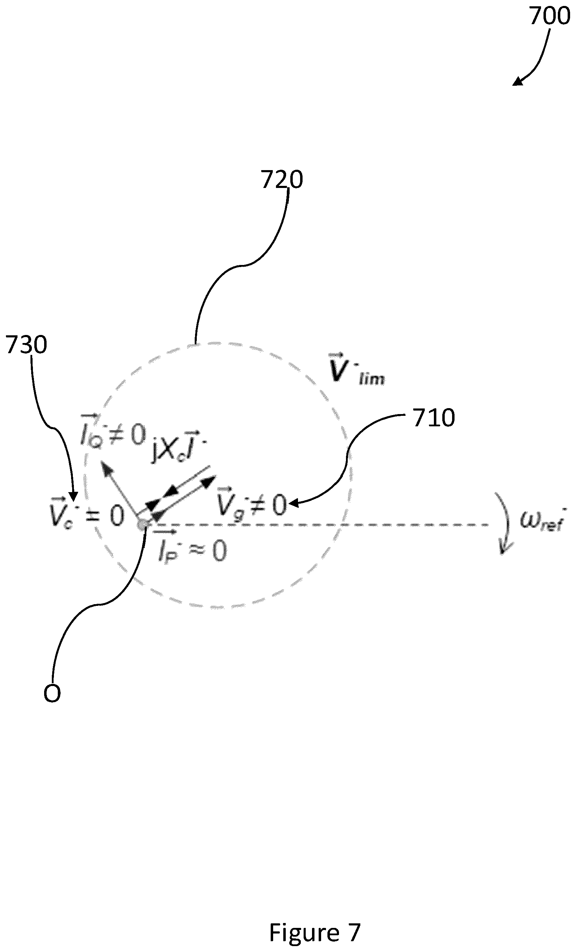

Figure 7 illustrates a further embodiment of a negative phase sequence phasor diagram 700.

The diagram 700 shows a negative phase sequence component of the first AC voltage (the measured grid voltage at the point of connection) as a first phasor 710 with a non-zero amplitude. The circular region 720 contains the origin O of the diagram 700. The negative phase sequence component of the second AC voltage (the converter output voltage) is illustrated as a second phasor 730 with negligible amplitude. The scenario represented by the diagram 700 will now be discussed.

In an AC network disturbance, an asymmetrical insulation fault in particular, there can result an abnormal voltage profile with the presence of a significant negative phase sequence component, at the point of connection of the power electronic interfaced device. However, if the disturbance is not very severe, or is electrically distant from the point of connection, the natural flow of negative phase sequence current resulting from this negative phase sequence voltage component may be smaller in amplitude than the predefined current limit for the power electronic converter. In such situations, the control method according to the invention, would not introduce any negative phase sequence component to the second AC voltage (the converter output voltage) as shown by phasor 730 in the diagram 700. Because both the converter and the grid impedances are predominantly reactive, the resulting negative phase sequence current would also typically be reactive. Put differently, because the origin O is encompassed by circular region 720 in the diagram 700, the control method does not control the converter to generate a negative sequence component of the second AC voltage 730 to counteract the negative sequence component of the first AC voltage (at the point of connection) 710.

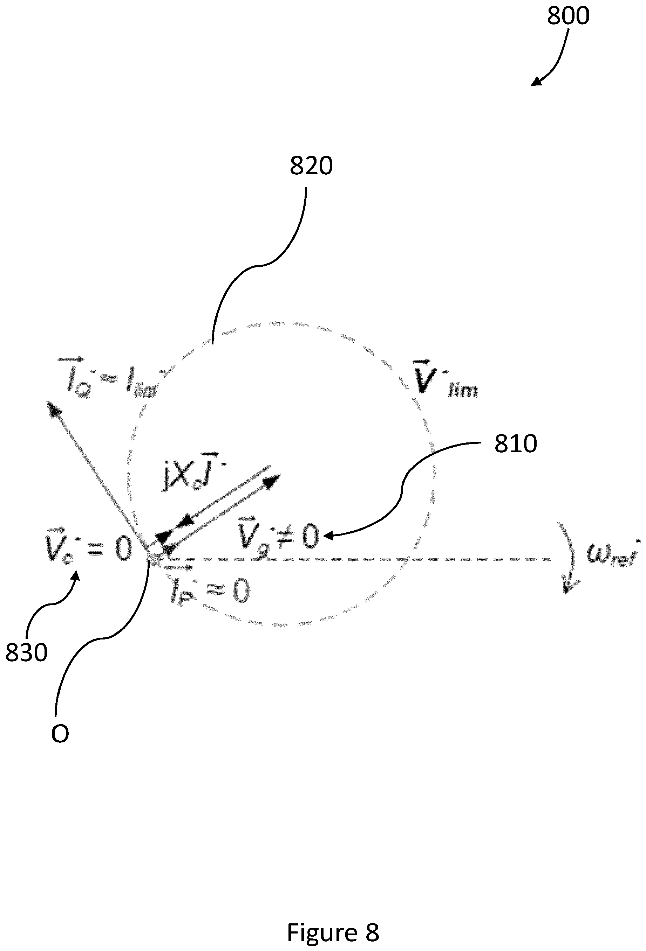

Figure 8 illustrates a further embodiment of a negative phase sequence phasor diagram 800.

The diagram 800 shows a negative phase sequence component of the first AC voltage (the measured grid voltage at the point of electrical connection) as a first phasor 810 with a non-zero amplitude. The origin O of the diagram 800 is on the boundary of circular phase-vector region 820. The negative phase sequence component of the second AC voltage (the converter output voltage) is illustrated as a second phasor 830 with negligible amplitude. The scenario represented by the diagram 800 will now be discussed.

The diagram 800 illustrates that the larger the negative phase sequence component of the first AC voltage (the grid voltage) at the point of connection, represented by first phasor 810, the bigger the distance of the origin O i.e. the negative phase sequence voltage vector resulting from the negative phase sequence current flowing through the converter impedance (-jXc), from the centre of the circular region 820, for all allowed negative phase sequence converter voltages.

If the negative phase sequence component of the first AC voltage (the grid voltage at the point of connection), represented by the first phasor 810, becomes large enough, the origin O will fall on the boundary of the circular region 820. Under such conditions, the negative phase sequence current has reached the predefined current limit. The control of the negative sequence component of the second AC voltage (the converter output voltage) when the origin O resides outside the circular region 820 will now be discussed.

It should be noted that the proposed current limiting method does not force any particular phase of the negative phase sequence current. It is, rather, determining the first AC voltage at the point of connection where a voltage limit boundary would be reached. However, as discussed herein, in most cases the negative phase sequence current would be predominantly reactive and hence the associated point at the voltage limit boundary will be at least based on the negative phase sequence voltage component of the AC voltage at the electrical point of connection, represented by phasor 810.

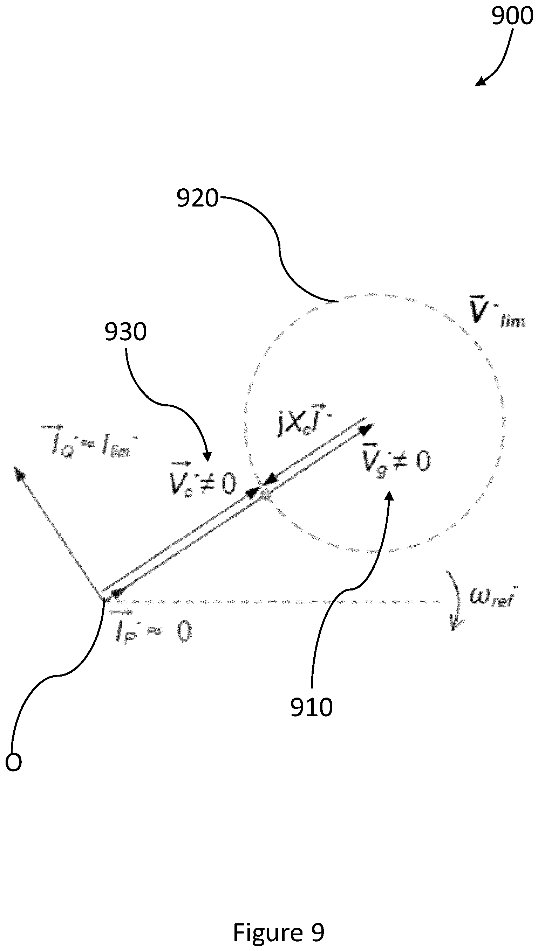

Figure 9 illustrates a further embodiment of a negative phase sequence phasor diagram 900.

The diagram 900 shows a negative phase sequence component of the first AC voltage (the measured grid voltage) as a first phasor 910 with a non-zero amplitude. The origin O of the diagram 900 is outside the boundary of circular region 920. The negative phase sequence component of the second AC voltage (the converter output voltage) is illustrated as a second phasor 930 with a non-zero amplitude. The scenario represented by the diagram 900 will now be discussed.

In accordance with the invention described herein, a negative sequence component of the first AC voltage (the grid voltage) at the point of connection to a power converter, as represented by first phasor 910, that results in the origin O of the diagram 900 residing outside of circular region 920, causes the introduction of a non-zero negative phase sequence component of second AC voltage (the converter voltage), as represented by second phasor 930.

More specifically, the negative phase sequence component of the second AC voltage (second phasor 930) is scaled such that the voltage difference between the negative phase sequence components of the first AC voltage (first phasor 910) and second AC voltage (second phasor 930) falls exactly on the boundary of the allowed converter voltages (the boundary of region 920).

Put differently, any increase in grid negative phase sequence voltage from the condition represented by Figure 8, causes the converter negative phase sequence voltage to follow the point on the voltage limit boundary that was reached at zero negative phase voltage output (from the converter). This will now be expressed mathematically.

The first limit value can be expressed using Equation 3, wherein the constant is a real number.

$$V_{lim}^- = Constant \qquad\qquad \text{Equation 3}$$

Utilizing Equation 1, the limiting effect can, by way of example, be expressed as an 'if type function that compares the first limit value, $V_{lim}^-$, to the reactance of the converter, $jX_c$, multiplied by the negative sequence current, $\vec{I}^-$, and based on whether the first limit value is exceeded, sets the negative sequence component of the converter voltage, $\vec{V}_c^-$, to zero, or sets the negative sequence component of the converter voltage to the difference between the first limit value and negative sequence voltage component of the measured grid voltage at the point of connection, $\vec{V}_g^-$, This is expressed in Equation 4.

$$If \left( \left| jX_c \vec{I}^- \right| \leq V_{lim}^- \right)$$
$$then\ \vec{V}_c^- = 0 e^{j0}$$
$$else\ \vec{V}_c^- = \left( \left| \vec{V}_g^- \right| - V_{lim}^- \right) . e^{\left( j.\arg(\vec{V}_g^-) \right)} \qquad \text{Equation 4}$$

The aspects and embodiments of the invention described tend to have the advantage of keeping the negative phase sequence component of the second AC voltage (the voltage output by the converter) at the minimum feasible level. This is substantially zero where the negative phase sequence component of the first AC voltage (measured grid AC voltage at the point of connection) is below a first limit value representing the voltage driving a negative sequence current at a predefined negative sequence current limit for a power electronic converter. In effect, the negative phase sequence current tends to flow naturally and in proportion to the degree of voltage unbalance. However, the method also keeps the negative phase sequence component of the second AC voltage as the difference between the negative phase sequence component of the first AC voltage and the first limit value, when the negative phase sequence component of the first AC voltage is equal to or above the first limit value. A power electronic converter hence tends to operate as a positive phase sequence source as much as possible and help to balance the AC system voltage, whilst limiting the negative phase sequence current to a safe value. Hence the requirement to overdesign circuits, in view of the potential for negative phase sequence currents stemming from electrical faults, tends to be reduced.

The invention is particularly relevant for controlling converter voltage output during asymmetrical faults and when the converter operates in SGFM control modes.

Reference throughout this specification to an example of a particular method or apparatus, or similar language, means that a particular feature, structure, or characteristic described in connection with that example is included in at least one implementation of the method and apparatus described herein. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the disclosed method and apparatus are described with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams.

The schematic flowchart diagrams and/or schematic block diagrams in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It will be appreciated that numerical values recited herein are merely intended to help illustrate the working of the invention and may vary depending on the requirements of a given power transmission network, component thereof, or power transmission application.

The listing or discussion of apparently prior-published documents or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

The disclosure herein provides a synchronous grid forming control method for a power electronic interfaced system connected to an AC grid at an electrical point called a point of connection, wherein the negative phase sequence voltage output of the power electronic converter is regulated in proportion to the detected value of the AC grid negative phase sequence voltage component at the point of connection, wherein the output negative phase sequence voltage of the converter is kept at zero for values of the AC grid negative phase sequence voltage component smaller than a voltage limit value, or making the output negative phase sequence voltage of the converter equal to the difference between the detected negative phase sequence component of the AC grid and the voltage limit value, when the negative phase sequence component of the AC grid exceeds the voltage limit value.

In some embodiments, the power electronic interfaced system is a HVDC converter station.

In some embodiments, a vector space is established around the detected values of the AC grid negative phase sequence voltage component and keeping the output negative phase sequence voltage of the converter at zero, for as long as the vector space is encompassing the zero point; and making the output negative phase sequence voltage of the converter to fall on the boundary of that vector space when it doesn't encompass the zero point.

In some embodiments, the voltage limit value (or defined vector space) is a function of the specified maximum allowed negative phase sequence converter AC current and the converter impedance (physical or virtual).

In some embodiments, the detected negative phase sequence component comprises any form of calculation of the negative phase sequence component of the voltage, wherein the input to the calculation could be a direct measurement of the phase voltage at the point of connection, or some indirect estimation method (for instance, a different voltage measurement point could be compounded with an AC current measurement).

**Claims**

1. A computer-implemented method of controlling a power converter in a power transmission network, the power converter having an alternating current 'AC' side electrically connected to an AC network at a point of connection, the method comprising:

   determining a first AC voltage at the point of connection, wherein the first AC voltage comprises a first negative phase sequence voltage component; and
   regulating a second AC voltage, output from the AC side of the power converter, for counteracting the first AC voltage, wherein the second AC voltage comprises a second negative phase sequence voltage component;
   wherein the step of regulating the second AC voltage comprises:

      comparing a first amplitude value of the first negative phase sequence voltage component to a first limit value; and then
      outputting the second negative phase sequence voltage component to comprise a second amplitude value that is:

         substantially equal to zero, when the comparing determines the first amplitude value is less than or equal to the first limit value; and
         substantially equal to the difference between the first amplitude value and the first limit value, when the comparing determines the first amplitude value is greater than the first limit value.

2. The computer-implemented method of claim 1, wherein the first limit value is a function of:

   an AC impedance of the power converter; and
   a predetermined maximum allowed negative phase sequence AC current for the power converter.

3. The computer-implemented method of any preceding claim, wherein the step of comparing the first amplitude to the first limit value comprises:

   determining, a first phasor representing the first negative phase sequence voltage component, the first phasor having an origin value and extending to the first amplitude value;
   determining a phase-vector region, centred on the first amplitude value and having a radius equal to the first limit value; and then
   determining whether the phase-vector region encompasses the origin value.

4. The computer-implemented method of claim 3, wherein:

   the comparing comprises determining the first amplitude value to be less than or equal to the first limit value when the phase-vector region encompasses the origin value; and
   the comparing comprises determining the first amplitude value to be greater than the first limit value, when the phase-vector region does not encompass the origin value.

5. The computer-implemented method of any preceding claim, wherein the determining the first AC voltage at the point of connection comprises:
   measuring, using voltage measurement means, the first AC voltage at the point of connection.

6. The computer-implemented method of any preceding claim, wherein the determining the first AC voltage at the point of connection comprises:
   decomposing the first AC voltage into at least the first negative phase sequence AC voltage component.

7. The computer-implemented method of any preceding claim, wherein the first AC voltage and the second AC voltage comprise respectively a first positive phase sequence AC voltage component and a second positive phase sequence AC voltage component.

8. The computer-implemented method of any preceding claim, wherein the power transmission network is a high voltage direct current 'HVDC' power transmission network.

9. The computer-implemented method of any preceding claim, wherein the power converter is a voltage sourced converter 'VSC', preferably a modular multilevel 'MMC' converter.

10. The computer-implemented method of any preceding claim, wherein the AC network is an AC power grid.

11. The computer-implemented method of any preceding claim, for use in synchronous grid forming 'SGFM'.

12. A controller for controlling a power converter in a power transmission network, the controller comprising:

   a memory; and
   at least one processor;
   wherein the memory comprises computer-readable instructions which when executed by the at least one processor cause the controller to perform the method of any preceding claim.

13. A power converter for a power transmission network, comprising:

   an AC side for electrically connecting to an AC network at a point of connection; and
   a DC side for electrically connecting to a DC network; and
   the controller of claim 12.

14. A power transmission network comprising:

   an AC network;
   a DC network; and
   the power converter of claim 13, wherein the AC network is connected to the AC side of the power converter and the DC network is connected to the DC side of the power converter.

15. A computer program comprising instructions which when executed by a processor of a controller for a power converter, cause the controller to perform the method of any one of claims 1-11.

Figure 1

Figure 2

Figure 3

Figure 4

Figure 5

600

620

630

$$\vec{V}_{lim}$$

$$\vec{V}_c = 0$$

610

$$\vec{I}_Q \approx 0 \qquad V_g \approx 0$$

$$\omega_{ref}$$

$$\vec{I}_P \approx 0$$

O

Figure 6

Figure 7

800

820

$\vec{I_Q} \approx I_{lim}$

$\vec{V}_{lim}$

810

$jX_c\vec{I}$

$\vec{V_g} \neq 0$

$\vec{V_c} = 0$

$\omega_{ref}$

$\vec{I_P} \approx 0$

830

O

Figure 8

Figure 9

Europäisches
Patentamt

European
Patent Office

Office européen
des brevets

# EUROPEAN SEARCH REPORT

Application Number

EP 23 17 8476

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 109 560 561 A (STATE GRID JIANGSU ELECTRIC POWER CO RES INST ET AL.) 2 April 2019 (2019-04-02) * abstract * * figures 1,2 * * claims 4,5 * ----- | 1-15 | INV. H02J3/36 H02M7/483 |
| A | US 2015/276827 A1 (SHARMA SANTOSH KUMAR [IN] ET AL) 1 October 2015 (2015-10-01) * figures 1,4 * * paragraphs [0047], [0048] * * claim 4 * ----- | 1-15 | |

TECHNICAL FIELDS
SEARCHED (IPC)

H02J
H02M

The present search report has been drawn up for all claims

| Place of search | Date of completion of the search | Examiner |
|---|---|---|
| Munich | 12 December 2023 | Zettler, Karl-Rudolf |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 17 8476

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2023

| Patent document cited in search report | | Publication date | Patent family member(s) | | Publication date |
|---|---|---|---|---|---|
| CN 109560561 | A | 02-04-2019 | NONE | | |
| US 2015276827 | A1 | 01-10-2015 | CN | 106133535 A | 16-11-2016 |
| | | | EP | 3126856 A1 | 08-02-2017 |
| | | | US | 2015276827 A1 | 01-10-2015 |
| | | | WO | 2015153440 A1 | 08-10-2015 |

EPO FORM P0459

For more details about this annex : see Official Journal of the European Patent Office, No. 12/82